# EUROPEAN PATENT SPECIFICATION

(11) **EP 0 551 368 B1**
(45) Date of publication and mention of the grant of the patent: **03.04.1996**
(21) Application number: 91917774.1
(22) Date of filing: 19.09.1991
(51) Int. Cl.: A47C 7/36, B60N 2/48

(54) **APPARATUS FOR PREVENTING WHIPLASH**
VORRICHTUNG ZUR VERHINDERUNG DES PEITSCHENTRIEB-EFFEKTS
DISPOSITIF SERVANT A PREVENIR LE ''COUP DU LAPIN''

(30) Priority: 20.09.1990 US 585392
(43) Date of publication of application: 21.07.1993
(73) Proprietor: DELLANNO, Ronald P., Bloomfield, NJ 07003 (US)
(72) Inventor: DELLANNO, Ronald, P., Bloomfield, NJ 07003 (US); GUALTIER, Quentin, E., North Caldwell, NJ 07006 (US)
(74) Representative: Simpson, Alison Elizabeth Fraser
(86) International application number: US9106808
(87) International publication number: WO9204847

(56) References cited:
- EP-A- 0 317 726
- GB-A- 2 194 883
- US-A- 2 990 008
- US-A- 4 256 341
- US-A- 4 424 599
- US-A- 4 693 515
- US-A- 4 754 513
- US-A- 4 829 614
- US-A- 4 832 007

## Description

### Field of the Invention

The present invention relates to apparatus for hygienically supporting a person's cranium and cervical spine including passenger safety apparatus for vehicles and, particularly, apparatus for preventing whiplash related injuries.

### Background Information

Whiplash related injuries are caused by the rapid acceleration of a person's cranium and cervical spine, which occurs, for example, in an automobile collision. The rapid acceleration causes the extension and flexion of the cervical spine which, in turn, can cause severe injury. Types of whiplash related injuries include fractured and/or dislocated vertebrae, torn ligaments (both anterior and posterior of the spinal column), and avulsion of parts of the vertebrae, ligaments and intervertebrae discs.

It has been found that the C4, C5 and C6 cervical vertebrae, and the paravertebrae ligaments are most often damaged with whiplash related injuries, although the entire cervical spine may well be involved. Rapid hyperextension of the cervical spine can stretch the anterior longitudinal ligament, thus placing it in traction and causing either bone or ligamentous damage. Such hyperextension typically damages the C1 through C7 cervical vertebrae. The vertebral artery, which extends through an opening in the vertebrae, and the sympathetic nerve fibers that surround the artery are also often damaged. These types of injuries cause severe disabilities and, in some instances, death.

Seatbacks and/or headrests in automobiles, trucks, and other types of vehicles are provided to prevent whiplash related injuries to passengers during collisions, but typically fail. During a rear-end vehicle collision, the forces of the collision typically cause a passenger's cranium and cervical spine to rapidly accelerate toward the rear of the vehicle. Once the cranium strikes the seatback or headrest, it then rapidly accelerates in the opposite direction toward the front of the vehicle. The rearward acceleration of the cranium, and resulting collision with the seatback or headrest, causes hyperextension of the cervical spine and, thus, typically injures the anterior structure of the passenger's neck. The forward acceleration of the cranium, on the other hand, causes hyperflexion of the cervical spine and typically injures the posterior structure of the neck.

One problem with known seatbacks and/or headrests is that the surface intended to stop the movement of a person's head and neck is typically flat, or does not correspond to the posterior contour thereof. As a result, during a rear-end collision, typically the back, or posterior portion of the cranium is the first portion of the passenger's body to strike the seatback or headrest. However, the cervical spine, which is located inferiorly with respect to the posterior portion of the cranium, continues to move toward the headrest. As a result, the cervical spine is forced to move relative to the cranium which, in turn, causes severe vertebral damage.

Also, the top surfaces of many known headrests are located at about the same height, or below the height of a passenger's ears, which is normally about the center of gravity of the head. When a passenger's cranium is forced against such a headrest during a collision, it often slides upwardly over the top edge of the headrest. As a result, the cranium is stretched upwardly relative to the cervical spine, typically causing further vertebral damage.

EP-0-317 726 from which the known features comprising the pre-characterising part of Claim 1 originate discloses a seat for a vehicle having an integral headrest. The headrest is provided with a continuously changeable vacuum cushion which can be individually adapted to the cervical vertebrae column lordosis of the seat user by means of an extraction pump and at least one valve.

It is the object of the present invention, therefore, to overcome the problems and disadvantages of known apparatus for preventing whiplash, such as vehicle headrests and seatbacks.

### Summary of the Invention

According to the present invention there is provided apparatus for preventing whiplash-related injuries to a passenger in a vehicle, and comprising a frame mounted on a seat of the vehicle, and a layer of resilient material provided on the frame adapted to provide a compound contoured surface for supporting the posterior contour of a passenger's cranium and cervical spine characterised in that the compound contoured surface comprises first, second, and third components said first component comprising a substantially flat portion projecting upwardly above the approximate centre of mass of the passenger's cranium and adapted to contact and support the approximate central posterior area of the cranium, said second component comprising a substantially flat portion extending anteriorly at an obtuse angle from the first component and adapted to contact and support the posterior region where the cranium meets the cervical spine and said third component comprising a substantially convex curve projecting anteriorly relative to the first component and the second component and including a convexly radiused portion having a centre of curvature that is anterior to the first component said third component adapted to contact and support the posterior portion of the cervical spine wherein the compound contoured surface serves to contact and support simultaneously the central posterior area of the cranium, the posterior portion where the cranium meets the cervical spine and the posterior portion of the cervical spine and simultaneously decelerate the cranium and cervical spine during a vehicle collision thereby preventing whiplash-related injuries.

An apparatus of the present invention further comprises a support member coupled to the frame and supported on the seat. The support member is vertically moveable relative to the seat to adjust the position of the apparatus relative to the passenger. Accordingly, the support member can be adjusted to, in turn, adjust the position of the supporting surface to correspond to the posterior contour of the passenger's cranium and cervical spine. The frame of the apparatus preferably defines a hollow enclosure, and the layer of resilient material consists essentially of a urethane foam molded thereon.

In an apparatus of the present invention, the frame is journaled to the support member, and normally biased toward the front of the seat. Thus, during a vehicle collision, when the passenger's head is forced toward the apparatus, the posterior portion of the passenger's cranium initially contacts the first area of the supporting surface, and causes the frame to rotate relative to the support member toward the back of the seat. Thus, the second and third areas of the supporting surface are, in turn, rotated into contact with the posterior portion of the passenger's lower cranium and cervical spine. The support member of the apparatus preferably includes two support legs and a bar extending therebetween. The two support legs are supported on the seat and oriented substantially parallel relative to each other, and the frame is journaled to the bar.

An apparatus of the present invention further includes a stop member coupled to the bar, and projecting upwardly therefrom. A stop plate is coupled to the frame and adapted to slide relative to the stop member. A spring is coupled between the stop plate and the bar. The spring biases the stop plate to slide relative to the stop member toward the front of the seat and, thus, biases the stop plate and frame toward the passenger's head. The stop plate defines an elongated aperture extending therethrough, and adapted to receive the stop member therein. The elongated aperture permits the stop plate to slide toward the front of the seat until a back wall defining the aperture engages the stop member, thus orienting the apparatus in a downwardly rotated position. The elongated aperture further permits the stop plate to slide toward the rear of the seat until a front wall defining the aperture abuts the stop member and, thus, orients the apparatus in an upright position.

One advantage of the apparatus of the present invention, is that because the supporting surface has a contour that corresponds to the posterior contour of the passenger's cranium and cervical spine, the apparatus can substantially simultaneously decelerate the cranium and cervical spine during a vehicle collision. As a result, whiplash related injuries typically encountered in such collisions are ordinarily avoided.

Other advantages of the apparatus of the present invention will become apparent in view of the following detailed description and drawings taken in connection therewith.

### Brief Description of the Drawings

Figure 1 is a front plan view of an apparatus for preventing whiplash related injuries embodying the present invention.

Figure 2 is a top plan view of the apparatus of Figure 1.

Figure 3 is a cross-sectional view taken along the line 3-3 of Figure 2, illustrating the contour of a typical passenger's cranium and cervical spine in broken lines.

Figure 4 is a side plan view, illustrated in partial cross-section, of another apparatus for preventing whiplash related injuries embodying the present invention, illustrating the posterior contour of a typical passenger's cranium and cervical spine in broken lines.

Figure 5 is a cross-sectional view of the apparatus of Figure 4, taken along the line 5-5 of Figure 4.

Figure 6 is a cross-sectional view of the apparatus of Figure 5, taken along the line 6-6 of Figure 5, and illustrating the posterior contour of a typical passenger's cranium and cervical spine in broken lines.

Figure 7 is a top plan view of a portion of the apparatus of Figure 4, taken along the line 7-7 of Figure 4.

### Detailed Description

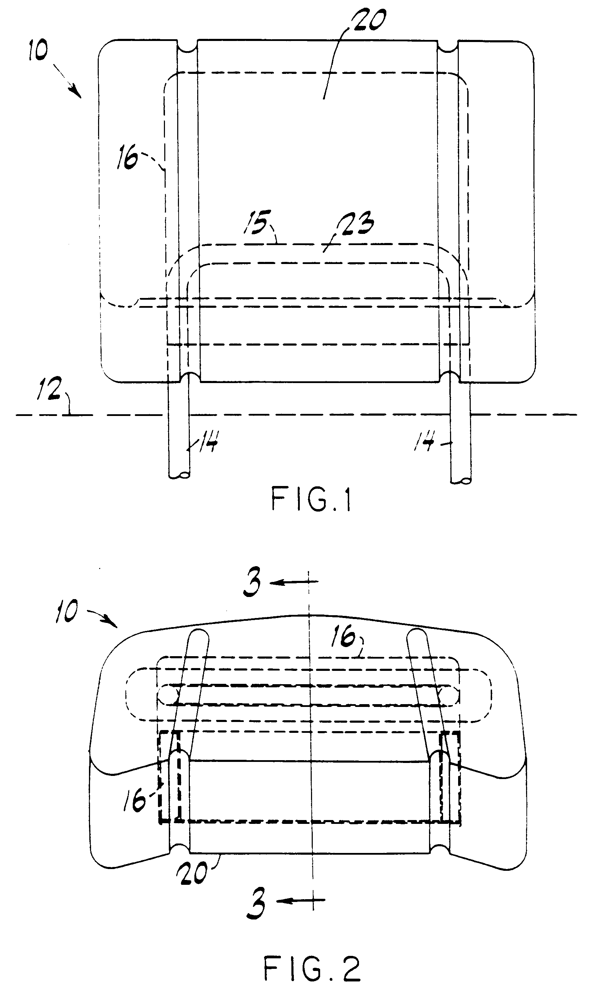

In Figures 1 through 3 an apparatus embodying the present invention for preventing whiplash related injuries is indicated generally by the reference numeral 10. The apparatus 10 is used as a headrest in a motor vehicle (not shown) and is supported on the top of a seatback 12 (illustrated schematically in dashed lines in Figure 1). The apparatus 10 is mounted on a support member including two vertical support legs 14 coupled together by a horizontal bar 15. The vertical support legs 14 are supported within the seatback 12, and are adjustable for adjusting the height of the apparatus 10 relative to the seatback 12, in a manner known to those skilled in the art.

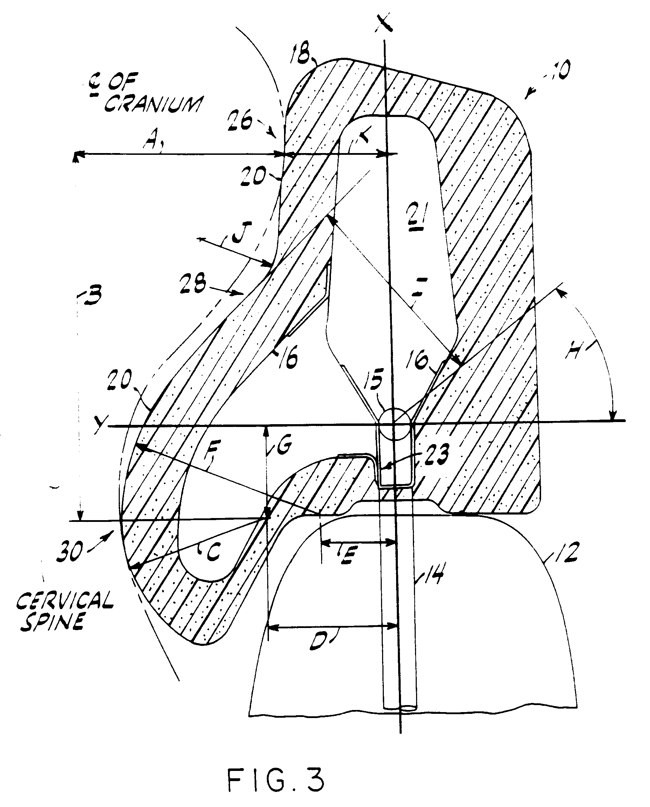

The apparatus 10 comprises an inner frame 16 coupled to the horizontal bar 15 and support legs 14. A resilient foam outer layer 18 is molded onto the inner frame 16. The foam layer 18 preferably consists essentially of a urethane foam typically used to make automobile headrests. As shown in Figure 3, the inner frame 16 and foam layer 18 define a head and neck supporting surface 20 on the front of the apparatus 10.

The posterior contour of a typical passenger's cranium and cervical spine is illustrated in phantom lines in Figure 3. As can be seen, the supporting surface 20 is shaped to conform to the typical posterior contour. The supporting surface 20 therefore includes three general areas: a first area 26, a second area 28 and a third area 30. As shown in Figure 3, the first area 26 is located to contact and support the approximate central posterior area of the passenger's cranium; the second area 28 is located to contact and support the posterior area approximately where the cranium meets the cervical spine; and the third area 30 is located to contact and support the posterior area of the cervical spine. Thus, as shown in Figure 3, because the contour of the surface 20 corresponds to the posterior contour of the cranium and cervical spine, each of the first area 26, second area 28, and third area 30 substantially simultaneously contact and support the respective portions of the passenger's body when moved into contact therewith.

One advantage of the apparatus 10 of the present invention, is that during a rear-end collision, when the passenger is forced toward the seatback 12, the passenger's cranium and cervical spine substantially simultaneously strike the supporting surface 20. The soft foam layer 18 absorbs the force of the collision and, in turn, substantially simultaneously decelerates the cranium and cervical spine. As a result, the apparatus 10 minimizes the risk of the occurrence of whiplash related injuries, because there is little movement of the cervical spine relative to the cranium during the collision.

The frame 16 of the apparatus 10 is formed to define a hollow enclosure 21, as shown in Figure 3. The foam layer 18 can, therefore, be molded directly onto the frame 16 in a manner known to those skilled in the art, such as by reaction injection molding. The bottom portion of the frame 16 is welded to the horizontal bar 15 and support legs 14 at several weld locations, indicated typically by the reference numeral 23 in Figure 1. The apparatus 10 is vertically adjustable by moving the support legs 14 up or down, so that the surface 20 corresponds to the posterior contour of the passenger's cranium and cervical spine, as shown in Figure 3.

The dimensions of the surface 20 are based on dimensions of the craniums and cervical spines of typical passengers. Referring to Figure 3, it has been found that the dimension A, which is the approximate radius of the posterior portion of a passenger's cranium, is about 3 inches. The dimension B, which is the approximate distance from the approximate center line of a passenger's cranium to the center line of the fifth vertebrae, is about 15.2 cm (6 inches).

The surface 20 of the apparatus 10 is shaped and dimensioned to substantially match the contour of a cranium and cervical spine based on these typical passengers' dimensions. Although the apparatus 10 does not exactly match the contour of every passenger's cranium and cervical spine, it substantially matches the contour for most passengers. As a result, it substantially simultaneously decelerates the cranium and cervical spine during a vehicle collision and, accordingly, prevents the occurrence of whiplash related injuries.

The dimensions (in inches) used for constructing the supporting surface 20 to match the posterior contour of a typical passenger's cranium and cervical spine in accordance with the present invention, as shown in Figure 3, are as follows:
- A =: (3.0) 7.62 cm
- B =: (6.0) 15.2 cm
- C =: (2-1/4) (radius) 5.7 cm
- D =: (2.0) 5.0 cm
- E =: (13/16) 2.06 cm
- F =: (3-7/16) (radius) 8.73 cm
- G =: (1-3/8) 3.49 cm
- H =: 45°
- I =: (2-15/16) 7.45 cm
- J =: (1-1/4) (radius) 3.17 cm
- K =: (1-7/16) 3.65 cm
The dimension C is the radius of the third area 30 of the surface 20 adapted to contact the cervical spine. The dimension D is the distance from the center line of the support legs 14 (the X axis) to the center of the radius C. The dimension F is the radius of the surface 20 where the second area 28 meets the third area 30. The dimension G is the distance from the center line of the horizontal bar 15 (the Y axis) to the center of the radius C. The angle H is the angle of a construction line drawn with respect to the Y axis.

The dimension I is the distance from the construction line drawn along the angle H to a portion of the second area 28 of the surface 20. The dimension J is the blend radius of the portion of the surface 20 where the first area 26 meets the second area 28. And the dimension K is the distance between the center line of the support legs 14 (the X axis), and a portion of the first area 26 of the surface 20.

It should be pointed out that although these dimensions have been found to be appropriate for the embodiment of the apparatus 10 illustrated, they may be varied within the scope of the present invention. For example, if it is determined that the typical dimensions A and B may be different for a group of passengers than as determined above, then the other dimensions of the apparatus 10 will change accordingly. Thus, in accordance with the present invention, the dimensions can be varied by those skilled in the art to ensure that the contour of the surface 20 matches the posterior contour of a typical passenger's cranium and cervical spine. In this way, during a vehicle collision, the apparatus 10 can substantially simultaneously decelerate the cranium and cervical spine and, as a result, prevent the occurrence of whiplash related injuries.

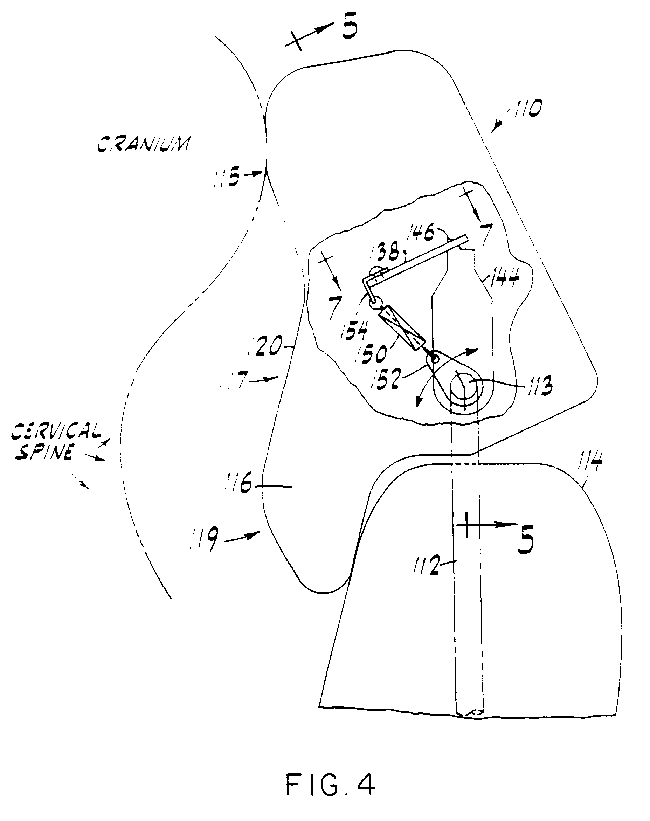

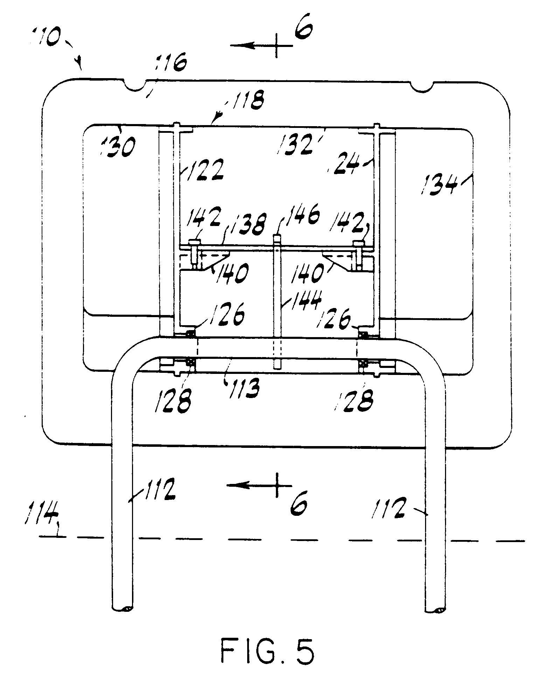

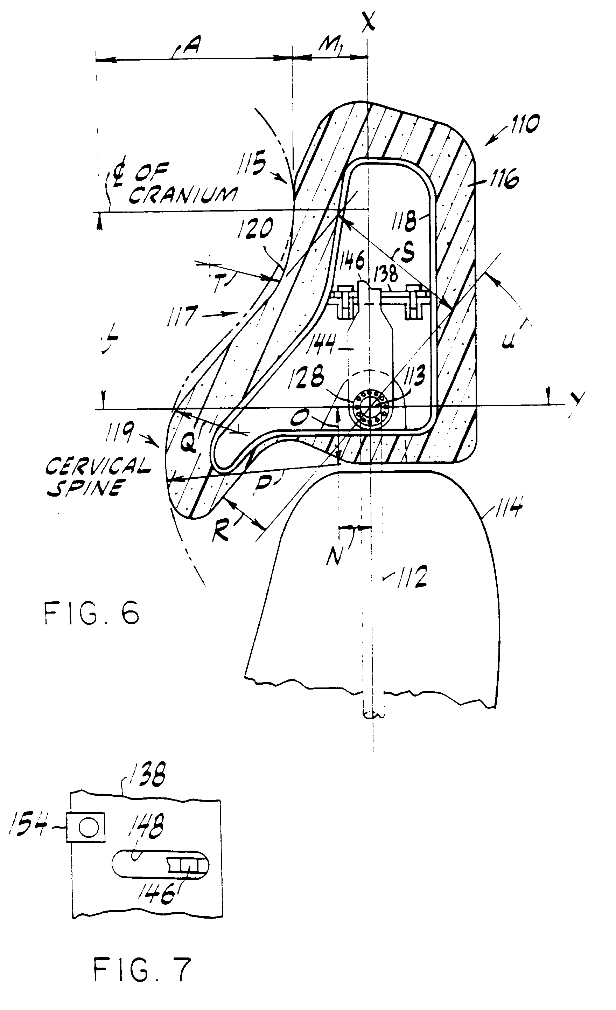

In Figures 4 through 7, another apparatus embodying the present invention is indicated generally by the reference numeral 110. The apparatus 110 is used as a headrest in a motor vehicle (not shown), and is mounted on a support including a pair of vertical support legs 112 coupled together by a horizontal bar 113. The support legs 112 are supported within a seatback 114 (illustrated schematically in dashed lines in Figure 5). The support legs 112 are vertically adjustable to adjust the position of the apparatus 110 relative to the cranium and cervical spine of a passenger (as illustrated in broken lines in Figures 4 and 6), in a manner known to those skilled in the art.

The apparatus 110 comprises a foam outer layer 116 molded onto a housing 118. The foam layer 116 preferably consists essentially of a urethane foam of a type typically used to make headrests. The foam layer 116 is directly molded onto the housing 118, in a manner known to those skilled in the art, such as by reaction injection molding. The housing 118 is rotatably supported on the horizontal bar 113 and, therefore, is movable in the direction indicated by the arrows in Figure 4, as described further below.

The apparatus 110 defines a head and neck supporting surface 120, as illustrated in Figures 4 and 6. The supporting surface 120 is shaped to conform to the posterior contour of a typical passenger's cranium and cervical spine, as shown in Figure 6. The supporting surface 120 includes a first contact area 115, a second contact area 117, and a third contact area 119. As shown in Figures 4 and 6, the first contact area 115 is located and shaped to support the approximate central posterior area of the passenger's cranium; the second contact area 117 is located and shaped to support the posterior area approximately where the passenger's cranium meets the cervical spine; and the third contact area 119 is located and shaped to support the posterior area of the passenger's cervical spine.

Accordingly, during a vehicle collision, if the passenger's head is thrown back toward the seatback 114, the first contact area 115, second contact area 117, and third contact area 119 of the surface 120 substantially simultaneously decelerate the cranium and cervical spine, as described further below. As a result, there is minimal movement of the cranium relative to the cervical spine and, accordingly, the occurrence of whiplash related injuries is ordinarily avoided.

As shown in Figure 5, the housing 118 comprises a left frame 122, and a right frame 124. Both the left and right frames are supported by the horizontal bar 113, and project upwardly therefrom in a direction substantially perpendicular thereto. Each of the frames 122 and 124 includes a flange 126, which is journaled to the horizontal bar 113 by sealed radial ball bearings 128. The housing 118 is therefore rotatable relative to the support legs 112, as indicated by the arrows in Figure 4.

The housing 118 further comprises a left enclosure 130, a center enclosure 132, and a right enclosure 134. The left enclosure 130 and the left side of the center enclosure 132 are coupled to the left frame 122 on either side thereof. The right enclosure 134 and the right side of the center enclosure 132, on the other hand, are coupled to the right frame 134 on either side thereof. The enclosures 130, 132 and 134 are, accordingly, coupled to each other to form the enclosed frame 118. The front face of each of the enclosures 130, 132, and 134 is shaped to support the foam layer 116 and form the support surface 120. The support surface 120 is, accordingly, shaped and dimensioned to correspond to the posterior contour of a typical passenger's cranium and cervical spine, as shown in Figures 4 and 6.

A top plate 138 is coupled to and extends between the left frame 122 and right frame 124. Each of the frames 122 and 124 includes a support shelf 140 for supporting the stop plate 138 thereon. The stop plate 138 is coupled on either end to the support shelves 140 by fasteners 142. A stop 144 is coupled to the center of the horizontal bar 113, preferably by welding, and extends upwardly therefrom in a direction substantially perpendicular to the axial direction thereof, as illustrated in Figures 4 through 6. The stop 144 includes a knob 146 extending upwardly from a top surface thereof.

As shown in Figure 7, the knob 146 is dimensioned to be received within an elongated aperture 148, extending through the center portion of the stop plate 138. The aperture 148 is dimensioned so that when the apparatus 110 is rotated back toward the seatback 114, the front wall of the aperture 148 engages the knob 146 and, thus, maintains the apparatus 110 in an upright position, as shown in Figure 6. Then, when the apparatus 110 is permitted to rotate toward the front of the seatback 114, the knob 146 slides through the elongated aperture 148. The knob 146, in turn, engages the back wall of the aperture 148 and, accordingly, maintains the apparatus 110 in a downwardly rotated position, as shown in Figure 4.

An extension spring 150 is coupled between the front of the stop plate 138, and the horizontal bar 113. A slip ring 152 is fitted on one end over the horizontal bar 113, and coupled on the other end to the extension spring 150. The other end of the extension spring 150 is coupled to the front end of the stop plate 138 by a fastener 154. The slip ring 152 is rotatable relative to the horizontal bar 113 and, therefore, permits the extension spring 150 and stop plate 138 to rotate relative to the stop 144. The extension spring 150 normally biases the stop plate 138 in the forward position against the knob 146, as shown in Figure 4. Therefore, the apparatus 110 is normally maintained in a forward rotated position so that the first area 115 of the support surface 120 is maintained in contact with, or in close proximity to, the posterior portion of the passenger's cranium, as shown in Figure 4.

However, in the event of a collision, if the passenger's head is thrown back toward the seatback 114, the cranium initially contacts the first area 115 of the support surface 120 and, in turn, causes the apparatus 110 to rotate in the direction back toward the seatback 114. As a result, the second area 117 and third area 119 of the support surface 120 are each rotated into engagement with the respective posterior portions of the cranium and cervical spine, as shown in Figure 6. Thus, when both the posterior portions of the cranium and cervical spine engage the support surface 120, the surface 120 substantially simultaneously decelerates both portions of the body. As a result, the occurrence of whiplash related injuries is ordinarily avoided. Then, once the passenger's head moves back toward the front of the vehicle and away from the seatback 114, the extension spring 150 causes the apparatus 110 to rotate toward the front of the seatback 114, and thus follow the passenger's head.

The dimensions of the support surface 120 of the apparatus 110 are determined in the same way as the dimensions of the support surface 20 described above in relation to Figures 1 through 3. Accordingly, the dimensions (in inches) used for constructing the support surface 120 to match the posterior contour of a typical passenger's cranium and cervical spine, in accordance with the present invention, are as follows:
- A =: (3.0) 7.62 cm
- L =: (4-3/8) 11.11 cm
- M =: (1-9/16) 3.96 cm
- N =: (5/8) 1.59 cm
- O =: 1-1/8 2.86 cm
- P =: 3-13/16 9.67 cm
- Q =: 1-1/4 (radius) 3.18 cm
- R =: 1-1/4 3.18 cm
- S =: 3-3/16 8.09 cm
- T =: 1-1/4 (radius) 3.18 cm
- U =: 50°
The dimension A, as described above, is the approximate radius of the posterior contour of a passenger's cranium. The dimension L is the vertical distance between the Y axis (intersecting the center line of the horizontal bar 113), and the approximate center line of a passenger's cranium. The dimension M is the distance between the center line of the support legs 112 (the X axis), and the first area 115 of the surface 120. The dimension N is the distance between the center line of the horizontal legs 112 (the X axis), and the center of the radius P. The dimension O is the distance between the Y axis and the center of the radius P. The dimension P is the radius of the lower portion of the third area 119 of the surface 120. The dimension Q is the blend radius of the lower portion of the surface 120 where the second area 117 meets the third area 119.

The dimension R is the distance between a construction line drawn along the angle U, and the portion of the under surface of the apparatus 110 facing the seatback 114. The dimension S is the distance between a construction line drawn along the angle U, and a portion of the second area 117 of the support surface 120. The dimension T is the blend radius of the portion of the surface 120 where the first area 115 meets the second area 117. And the angle U is the angle of the construction line drawn parallel to a portion of the second area 117 of the surface 120, as shown in Figure 6, with respect to the Y axis.

It should be pointed out that although these dimensions have been found to be appropriate for the embodiment of the present invention illustrated, they may be varied within the scope of the present invention. For example, the typical dimensions of the posterior contour of the cranium and cervical spine may be different for a particular group of passengers. Thus, in accordance with the present invention, these dimensions can be varied to ensure that the contour of the surface 120 matches the posterior contour of each passenger's cranium and cervical spine. Therefore, during a vehicle collision, the apparatus 110 can substantially simultaneously decelerate the cranium and cervical spine and, as a result, prevent the occurrence of whiplash related injuries.

Thus, one advantage of the apparatus of the present invention, is that during a rear-end collision, the supporting surface simultaneously decelerates the cranium and cervical spine, because it is located and shaped to match the general contour thereof. As a result, there is substantially no movement of the cranium relative to the cervical spine, as with known seatbacks and/or headrests. The occurrence of whiplash related injuries caused by damaging the cervical spine is, accordingly, ordinarily avoided.

Another advantage of the apparatus of the present invention, is that the first contact area of the supporting surface extends upwardly beyond the approximate central posterior area of the passenger's cranium, as shown in Figures 3 and 6. As a result, when the passenger's cranium strikes the first contact area during a collision, it is typically not permitted to slide upwardly over the top edge of the apparatus. Accordingly, vertebral damage typically associated with known seatbacks and/or headrests caused by stretching the cranium upwardly relative to the vertical spine, is avoided.

## Claims

1. Apparatus (10) for preventing whiplash-related injuries to a passenger in a vehicle, and comprising a frame (16) mounted on a seat of the vehicle, and a layer of resilient material (18) provided on the frame (16) adapted to provide a compound contoured surface (20) for supporting the posterior contour of a passenger's cranium and cervical spine characterised in that the compound contoured surface comprises first, second, and third components said first component (26) comprising a substantially flat portion projecting upwardly above the approximate centre of mass of the passenger's cranium and adapted to contact and support the approximate central posterior area of the cranium, said second component (28) comprising a substantially flat portion extending anteriorly at an obtuse angle from the first component (26) and adapted to contact and support the posterior region where the cranium meets the cervical spine and said third component (30) comprising a substantially convex curve projecting anteriorly relative to the first component and the second component and including a convexly radiused portion having a centre of curvature that is anterior to the first component said third component adapted to contact and support the posterior portion of the cervical spine wherein the compound contoured surface (20) serves to contact and support simultaneously the central posterior area of the cranium, the posterior portion where the cranium meets the cervical spine and the posterior portion of the cervical spine and simultaneously decelerate the cranium and cervical spine during a vehicle collision thereby preventing whiplash-related injuries.

2. Apparatus as claimed in claim 1 wherein there is further provided a support member (112, 113) arranged within the vehicle seat and adjustable relative to the passenger's cranium and cervical spine and a housing (118) coupled to the support member and including the layer of resilient material (116) adapted to support the passenger's cranium and cervical spine when moved into contact therewith.

3. Apparatus as claimed in claim 1 and claim 2 wherein a support member (112, 113) is coupled to the frame and mounted on the seat, the support (112) member being vertically moveable relative to the seat (114) to adjust the position of the apparatus relative to the passenger and to align the position of the compound contoured surface (120) with the posterior contour of the passenger's cranium and cervical spine.

4. Apparatus as claimed in any of the preceding claims wherein the frame defines a hollow enclosure and the layer of resilient material consists essentially of a moulded urethane foam.

5. Apparatus as claimed in claims 2 - 4 wherein the housing (118) is rotatable relative to the support member (113) and includes means (150) for biasing the apparatus in a downwardly rotated first position toward the passenger such that during a vehicle collision when the passenger's head is moved into contact with the apparatus, the housing (118) is rotated into an upright second position thereby allowing the compound contoured surface (120) to contact and support the posterior portion of the passenger's cranium and cervical spine.

## Patentansprüche

1. Vorrichtung (10) zur Verhinderung von mit dem Peitschenhiebeffekt im Zusammenhang stehenden Verletzungen eines Fahrzeuginsassen, mit einem an einem Sitz des Fahrzeugs befestigten Rahmen (16) und einer an dem Rahmen (16) vorgesehenen Schicht aus elastischem Material (18), die so ausgeführt ist, daß sie eine konturierte Verbundfläche (20) zum Stützen der hinteren Kontur des Schädels und der Halswirbelsäule eines Insassen bildet, dadurch gekennzeichnet, daß die konturierte Verbundfläche eine erste, zweite und dritte Komponente umfaßt, wobei die erste Komponente (26) einen im wesentlichen flachen Teil umfaßt, der nach oben über den ungefähren Massenmittelpunkt des Schädels des Insassen hinaus vorragt und so ausgeführt ist, daß er den ungefähr mittleren, hinteren Bereich des Schädels berührt und stützt, wobei die zweite Komponente (28) einen im wesentlichen flachen Teil umfaßt, der sich in einem stumpfen Winkel von der ersten Komponente (26) aus nach vorne erstreckt und so ausgeführt ist, daß er den hinteren Bereich, wo der Schädel auf die Halswirbelsäule trifft, berührt und stützt, und wobei die dritte Komponente (30) eine im wesentlichen konvexe Krümmung umfaßt, die bezüglich der ersten und zweiten Komponente nach vorne vorragt und einen Teil mit konvexem Radius enthält, dessen Krümmungsmittelpunkt vor der ersten Komponente liegt, wobei die dritte Komponente so ausgeführt ist, daß sie den hinteren Teil der Halswirbelsäule berührt und stützt, wobei die konturierte Verbundfläche (20) zum gleichzeitigen Berühren und Stützen des mittleren, hinteren Bereichs des Schädels, des hinteren Bereichs, wo der Schädel auf die Halswirbelsäule trifft, und des hinteren Bereichs der Halswirbelsäule und zum gleichzeitigen Verlangsamen des Schädels und der Halswirbelsäule bei einem Fahrzeugaufprall dient, wodurch mit dem Peitschenhieb-Effekt in Zusammenhang stehende Verletzungen vermieden werden.

2. Vorrichtung nach Anspruch 1, bei der weiterhin ein Stützglied (112, 113), das im Fahrzeugsitz angeordnet ist und bezüglich des Schädels und der Halswirbelsäule des Insassen verstellbar ist, und ein Gehäuse (118) vorgesehen ist, das mit dem Stützglied verbunden ist und die Schicht aus elastischen Material (116) enthält, die so ausgeführt ist, daß sie den Schädel und die Halswirbelsäule des Insassen stützt, wenn sie damit in Berührung kommt.

3. Vorrichtung nach Anspruch 1 und 2, bei der ein Stützglied (112, 113) mit dem Rahmen verbunden und an dem Sitz befestigt ist, wobei das Stützglied (112) bezüglich des Sitzes (114) vertikal beweglich ist, um die Position der Vorrichtung bezüglich des Insassen einzustellen und die Position der konturierten Verbundfläche (120) auf die hintere Kontur des Schädels und der Halswirbelsäule des Insassen auszurichten.

4. Vorrichtung nach einem der vorhergehenden Ansprüche, bei der der Rahmen eine hohle Umhüllung definiert und die Schicht aus elastischem Material im wesentlichen aus einem geformten Urethanschaumstoff besteht.

5. Vorrichtung nach den Ansprüchen 2 - 4, bei der das Gehäuse (118) bezüglich des Stützgliedes (113) drehbar ist und ein Mittel (150) zum Vorspannen der Vorrichtung in eine nach unten gedrehte erste Position zum Insassen hin enthält, so daß das Gehäuse (118) bei einem Fahrzeugaufprall, wenn der Kopf des Insassen mit der Vorrichtung in Berührung bewegt wird, in eine aufrechte zweite Position gedreht wird, wodurch die konturierte Verbundfläche (120) den hinteren Teil des Schädels und der Halswirbelsäule berühren und stützen kann.

## Revendications

1. Dispositif (10) servant à prévenir des blessures liées au "coup du lapin" occasionnées au passager d'un véhicule, et comprenant un cadre (16) monté sur un siège du véhicule, et une couche de matériau élastique (18) prévue sur le cadre (16), destinée à fournir une surface (20) de contour composé pour supporter le contour postérieur du crâne et des vertèbres cervicales d'un passager, caractérisé en ce que la surface de contour composé comprend des premier, second et troisième composants, ledit premier composant (26) comprenant une portion substantiellement plane se projetant vers le haut au-dessus du centre de masse approximatif du crâne du passager, et destinée à venir en contact avec approximativement la zone postérieure centrale du crâne et à la supporter, ledit second composant (28) comprenant une portion substantiellement plane s'étendant en avant suivant un angle obtus par rapport au premier composant (26) et destinée à venir en contact avec la région postérieure où le crâne et les vertèbres cervicales se rejoignent et à la supporter, et ledit troisième composant (30) comprenant une courbe substantiellement convexe se projetant vers l'avant par rapport au premier composant et au second composant, et comportant une portion à rayon de courbure convexe dont le centre de courbure se trouve en avant du premier composant, ledit troisième composant étant destiné à venir en contact avec la portion postérieure des vertèbres cervicales et à la supporter, la surface de contour composé (20) servant à venir en contact simultanément avec la zone postérieure centrale du crâne, la portion postérieure où le crâne et les vertèbres cervicales se rejoignent et la portion postérieure des vertèbres cervicales et à les supporter, et à freiner simultanément le crâne et les vertèbres cervicales lors d'une collision du véhicule, pour ainsi prévenir des blessures liées au "coup du lapin".

2. Dispositif selon la revendication 1, dans lequel on prévoit en outre un organe de support (112, 113) arrangé à l'intérieur du siège du véhicule et ajustable par rapport au crâne et aux vertèbres cervicales du passager, et un logement (118) couplé à l'organe de support et comportant la couche de matériau élastique (116) destinée à supporter le crâne et les vertèbres cervicales du passager lorsqu'ils sont déplacés en contact avec celle-ci.

3. Dispositif selon la revendication 1 et la revendication 2, dans lequel un organe de support (112, 113) est couplé au cadre et monté sur le siège, l'organe (112) de support étant déplaçable verticalement par rapport au siège (114) pour ajuster la position du dispositif par rapport au passager et pour aligner la position de la surface de contour composé (120) avec le contour postérieur du crâne et des vertèbres cervicales du passager.

4. Dispositif selon l'une quelconque des revendications précédentes, dans lequel le cadre définit une enceinte creuse et la couche de matériau élastique se compose essentiellement d'une mousse uréthane moulée.

5. Dispositif selon les revendications 2 - 4, dans lequel le logement (118) peut tourner par rapport à l'organe de support (113) et comporte un moyen (150) pour pousser le dispositif dans une première position tournée vers le bas vers le passager, de telle sorte que lors d'une collision du véhicule lorsque la tête du passager est déplacée en contact avec le dispositif, le logement (118) soit tourné dans une seconde position relevée permettant ainsi à la surface de contour composé (120) de venir en contact avec la portion postérieure du crâne et des vertèbres cervicales du passager et les supporter.
